# EUROPÄISCHE PATENTSCHRIFT

(11) **EP 0 692 559 B1**
(45) Veröffentlichungstag und Bekanntmachung des Hinweises auf die Patenterteilung: **14.04.1999**
(21) Anmeldenummer: 95109424.2
(22) Anmeldetag: 19.06.1995
(51) Int. Cl.: D01F 2/00, D01F 2/04, D01F 2/06, D01F 2/10, D06P 3/66

(54) **Mit polymeren Aminverbindungen modifizierte synthetische cellulosische Fasern**
Synthetic cellulosic fibres modified with polymeric amine compounds
Fibres synthétiques cellulosiques modifiées par des composés aminés polymères

(30) Priorität: 30.06.1994 DE 4422864
(43) Veröffentlichungstag der Anmeldung: 17.01.1996
(73) Patentinhaber: DyStar Textilfarben GmbH & Co. Deutschland KG, 60318 Frankfurt am Main (DE)
(72) Erfinder: Schrell, Andreas, Dr., D-65929 Frankfurt am Main (DE); Huber, Bernd, Dr., D-93309 Kelkheim (DE)

(56) Entgegenhaltungen:
- EP-A- 0 284 010
- CH-A- 448 015
- DATABASE WPI Section Ch, Week 8652 Derwent Publications Ltd., London, GB; Class A11, AN 86-343840 & JP-A-61 258 801 ( NITTO BOSEKI KK) , 17.November 1986
- MELLIAND TEXTILBERICHTE, Nr. 6, Juni 1964 HEIDELBERG, BRD, Seiten 641-647, DR. U. EINSELE 'Über die Aminierung von Cellulosefasern und deren physikalisches und chemisches Verhalten bei der Textilveredlung'

## Beschreibung

Die vorliegende Erfindung beschreibt mit polymeren Aminverbindungen modifizierte Cellulosefasern mit verbessertem Anfärbeverhalten und erhöhten Faserfestigkeiten im trockenen und nassen Zustand.

In ihrem Färbeverhalten gleichen aus Lösung ersponnene Cellulosefasern, im wesentlichen dem der Baumwollfasern. Beim derzeitigen Stand der Technik sind zum Färben cellulosischer Natur- oder Regeneratfasern alkalispendende Mittel sowie Elektrolyte notwendig, um befriedigende Fixierergebnisse mit Reaktivfarbstoffen zu erzielen. Gerade diese notwendigen Zusätze stellen jedoch nicht zu akzeptierende Umweltbelastungen dar. Für die Zukunft von zunehmender Bedeutung werden daher Synthesefasern, aufbauend auf Cellulose, sein, die salz- und alkalifrei färbbar sind. Eine Möglichkeit besteht darin, die Viskosefasern so zu modifizieren, daß sie in ihrem chemischen Verhalten tierischen Fasern, wie Wolle oder Seide, ähneln und unter neutralen Bedingungen mit anionischen Farbstoffen ohne weitere Salz- oder Alkalizusätze gefärbt werden können.

Modifizierungen von Viskose sind in der Literatur bereits beschrieben. Die DE-A-1 948 487 beispielsweise beschreibt ein Verfahren zur Herstellung von Viskosefasern mit geänderten Färbeeigenschaften. Die Herstellung gestaltet sich aber äußerst aufwendig und unwirtschaftlich. Darüberhinaus kommen Polyaminamide zum Einsatz, die den nativen Charakter der Faser aufgrund eines überwiegend lipophilen Aufbaus der verwendeten Zusätze bedeutend stören. Dies kommt beispielsweise durch Verwendung von Dispersionsfarbstoffen beim späteren Färben zum Ausdruck.

Auch ist der Zusatz von Aminverbindungen zur Verbesserung der physikalischen Eigenschaften von Viskosefasern bekannt. Neben einer Vielzahl von mono- oder oligomeren Aminen werden auch polymere Verbindungen wie polyethoxylierte Amine oder Polyalkylenpolyamine beschrieben. Eine Zusammenfassung über Komponenten und ihre Wirkungen ist in K. Götze, Chemiefasern nach dem Viskoseverfahren, Springer Verlag 1967, S. 635 ff. zu finden.

Auch die DE-A-1 469 062 beschreibt aminalisierte Fasern. Bei den Zusätzen handelt es sich um Aminoethyl- und Diethylaminoethylcellulosen in hoher Konzentration, das Einfärben geschieht ausschließlich mit Säurefarbstoffen.

In EP-A-0 284 010, EP-A-0 359 188 und EP-A-0 546 476 werden verschiedene aminogruppenhaltige Verbindungen als Mittel zur Vorbehandlung der Oberfläche von Cellulosefasern enthaltenden Textilien vor dem Färbeprozeß beschrieben. Der Nachteil solcher Verfahren besteht in einem zusätzlichen Verfahrensschritt und einem Vergilben des Gewebes.

Der vorliegenden Erfindung lag die Aufgabe zugrunde, modifizierte Viskosefasern zur Verfügung zu stellen, um Textilien aus solchen Fasern salz- und alkalifrei mit Reaktivfarbstoffen zu färben und die genannten Nachteile des Standes der Technik zu vermeiden.

Es wurde gefunden, daß diese Aufgabe überraschenderweise durch Beimischen nachstehend genannter Modifikatoren zu einer Viskosespinnlösung oder einer Celluloselösung gelöst wird.

Die erfindungsgemäßen Fasern lassen sich mit Reaktivfarbstoffen ohne Zusätze von Alkali und Salzen färben. Auch eine Färbung mit Säurefarbstoffen ist leicht möglich.

Darüberhinaus weisen diese Fasern, wenn sie nach dem Viskoseverfahren ersponnen werden, im Vergleich zu herkömmlichen Viskosefasern höhere Reißfestigkeiten und Reißdehnungen sowohl im trockenen als auch im nassen Zustand auf.

Gegenstand der vorliegenden Erfindung sind modifizierte Cellulosefasern, hergestellt, indem man einer Celluloselösung einen Modifikator zusetzt und die Lösung verspinnt oder einer Viskoselösung einen Modifikator zusetzt und nach dem Viskosespinnverfahren Fasern spinnt, dadurch gekennzeichnet, daß der Modifikator ein Polyvinylamin mit einer Molmasse von mehr als 50 000 ist und aus den monomeren Einheiten der Formel (1) 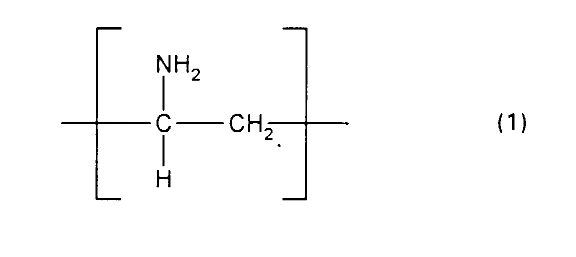 besteht.

Die Herstellung der erfindungsgemäß eingesetzten polymeren Aminverbindungen kann nach dem Fachmann allseits geläufigen Methoden erfolgen, beispielsweise analog zu den in US-PS 3 544 363 beschriebenen Polyiminen.

Damit die Modifikatoren in den Fasern eingelagert verbleiben und nicht bei den nachfolgenden Fäll-, Streck- und Waschprozessen ausgewaschen werden, sind höhere Molekulargewichte und damit längere Molekülketten erforderlich. Für die Verbesserung der physikalischen Fasereigenschaften ist ein Verbleiben der Modifikatoren in den Fasern nicht erforderlich, aber eine Verbesserung der Anfärbeeigenschaften kann nur erreicht werden, wenn die Modifikatoren in den Fasern verbleiben.

Die Menge des in die erfindungsgemäßen Cellulosefasern eingelagerten Modifikators beträgt zweckmäßigerweise 0,1 bis 10 Gew.-%, vorzugsweise 0,3 bis 3 Gew.-%, bezogen auf den Cellulosegehalt der Spinnmasse vor der Fällung und Verformung. Entscheidend für die Menge des einzusetzenden Modifikators ist insbesondere der Gehalt an seitengruppenständigen Aminogruppen.

Werden die erfindungsgemäßen Fasern nach dem Viskosespinnverfahren hergestellt, so wird zunächst die Cellulose alkalisch aufgeschlossen (Alkalicellulose), dann mit Schwefelkohlenstoff umgesetzt, in Wasser oder verdünnter Lauge gelöst und dann dieser Viskoselösung der Modifikator zugegeben. In einer alternativen Ausführungsform wird der Modifikator direkt der Alkalisierlauge zugesetzt und die modfizierte Alkalicellulose anschließend mit Schwefelkohlenstoff zum Xanthogenat umgesetzt. Durch den Zusatz des Modifizierungsmittels beim Alkalisieren wird die Reaktivität der Cellulose für die Xanthogenierung erhöht. Dies ermöglicht die Herstellung einer besser filtrierbaren Spinnlösung und eine Reduzierung des CS₂- oder Lauge-Einsatzes. Die Umsetzung mit Schwefelkohlenstoff geschieht zweckmäßigerweise bei Temperaturen von 15 bis 30°C. Nach dem Lösen werden durch anschließendes Verspinnen in einem sauren Spinnbad die erfindungsgemäßen modifizierten Cellulosefasern erhalten.

Werden die erfindungsgemäßen Fasern nach anderen üblichen, dem Fachmann geläufigen Verfahren zur Herstellung cellulosischer Fasern aus Lösung heraus, wie beispielsweise dem Cuproverfahren, dem Lyocellverfahren und dem Verfahren über niedrig substituierte Celluloseether, hergestellt, so wird die Cellulose in einem geeigneten organischen Lösemittel gelöst, mit dem Modifikator versetzt und direkt aus der Lösung zu Fasern versponnen. Am günstigsten ist ein Zudosieren unmittelbar vor der Verspinnung, wobei die Einmischung und homogene Verteilung durch bekannte Mischsysteme mit Hilfe von statischen oder dynamischen Mischsystemen erfolgen kann. Das Zudosieren kann aber auch in einer beliebigen Vorstufe bei der Spinnmasseherstellung erfolgen.

Der Vorteil des erfindungsgemäßen Modifikators liegt in der einfachen technischen Anwendung, da dieser als Substanz direkt oder als wäßrige Zubereitung mit einem Gehalt von über 50 %, gegebenenfalls auch mit Hilfe eines Emulgators, in die Spinnmasse oder die Alkalisierlauge eingearbeitet werden kann.

Dadurch können einerseits hohe Einlagerungen realisiert und andererseits negative Auswirkungen auf physikalische Fasereigenschaften durch Verdünnungseffekte vermieden werden.

Die erfindungsgemäßen Modifikatoren eignen sich insbesondere für den Einsatz bei Viskosefasern, da sich neben dem Anfärbeverhalten auch die physikalischen Eigenschaften der Fasern verbessern.
Nach der Zudosierung können die Spinnlösungen nach den bekannten Verfahren zur Faserherstellung weiterverarbeitet werden. Gravierende Änderungen der Verfahren sind nicht erforderlich. Beim Viskosespinnverfahren können die vom Einsatz von Modifikatoren bekannten Verfahrensänderungen, wie z.B. eine erhöhte Verstreckung, mit Erfolg angewandt werden.

Die Filtrierbarkeit der Viskose zeigt keine Verschlechterung im Vergleich mit zusatzfreien Proben, so daß im Verlauf des Spinnvorganges kein Verstopfen der Spinndüse zu beobachten ist. Wird der Modifikator bei der Alkalisierung zugesetzt, wird eine Verbesserung der Filtrierbarkeit beobachtet. Die Verformung der Viskose wird nach üblichen und bekannten Methoden durchgeführt, wie z.B. mit Spinndüsen, einem nachfolgenden Fällbad, sowie gegebenenfalls weiteren Nachbehandlungsbädern.

Die seitengruppenständigen Aminogruppen führen im Vergleich z.B. zu Polyalkylenpolyaminen mit der Aminogruppe in der Hauptkette zu einer höheren Farbstoffaufnahme, zu einer besseren Fixierung der Farbstoffmoleküle und zu besseren Echtheiten, wenn man eine gleiche Häufigkeit an Aminfunktionen in der polymeren Kette zugrunde legt.

Die erfindungsgemäß hergestellten modifizierten Cellulosefasern können nach Verarbeitung zu Geweben und Gewirken mittels verschiedenster Verfahren, wie Auszieh-, Klotz- und modernen Druckverfahren, hierzu gehören auch Ink-Jet-Verfahren, ohne Einsatz von zusätzlichem Elektrolyt-Salz oder Alkali mit Reaktivfarbstoffen gefärbt werden.

Die erfindungsgemäßen Fasern sind bezüglich Färben mit Reaktivfarbstoffen bedeutend affiner als herkömmliche Viskosefasern, unterscheiden sich aber in den sonst gewünschten Eigenschaften, wie Griff, kaum gegenüber den herkömmlichen Viskosefasern.

Sowohl die nach dem Viskoseprozeß als auch die aus Lösung ersponnenen erfindungsgemäßen Fasern sind mit Reaktivfarbstoffen ohne zusätzliches Alkali und Salz sowie mit Säurefarbstoffen anfärbbar. Die nach dem Viskoseprozeß ersponnenen erfindungsgemäßen Cellulosefasern zeichnen sich darüberhinaus durch verbesserte Trocken- und Naßfestigkeiten aus.

Das textile modifizierte Fasermaterial, das für nachfolgende Färbeverfahren eingesetzt wird, kann in allen Verarbeitungszuständen, so als Garn, Flocke, Gestrick, Kammzug und Stückware (Gewebe) vorliegen.

Die nach den beschriebenen Methoden erhaltenen Fasern können als Flocke gefärbt oder nach der Verarbeitung zu Flächengebilden als beispielsweise Gewebe, Gewirke oder Vliese mittels verschiedener Verfahren, wie Auszieh-, Klotz- oder Druckverfahren, direkt ohne Einsatz von Salz und Alkali gefärbt werden. Neben Substantiv- und Reaktivfarbstoffen können auch Säurefarbstoffe eingesetzt werden.

Das erfindungsgemäße Färben der modifizierten textilen Fasermaterialien erfolgt analog bekannten Färbeweisen und Druckverfahren zum Färben oder Bedrucken von Fasermaterialien mit wasserlöslichen Textilfarbstoffen und unter Anwendung der hierfür bekanntermaßen eingesetzten Temperaturbereiche und üblichen Farbstoffmengen, jedoch mit der Ausnahme, daß für die Färbebäder, Klotzflotten, Druckpasten oder Ink-Jet-Formulierungen ein Zusatz von alkalisch wirkenden Verbindungen, wie sie üblicherweise zur Fixierung von faserreaktiven Farbstoffen benutzt werden, nicht erforderlich ist und des weiteren auf übliche Zusätze an Elektrolytsalzen verzichtet werden kann.

Als Färbeverfahren kommen beispielsweise die verschiedenen Ausziehverfahren, wie das Färben auf dem Jigger und auf der Haspelkufe oder das Färben aus langer oder kurzer Flotte, das Färben in Jet-Färbemaschinen, das Färben nach Klotz-Kaltverweilverfahren oder nach einem Klotz-Heißdampf-Fixierverfahren in Betracht. Als Druckverfahren kommen herkömmliche Drucktechniken einschließlich des Ink-Jet-Printings und des Transferdruckes in Betracht.

Die Farbstoffe, die zum Färben der modifizierten Cellulose genutzt werden, sind im allgemeinen anionischer Natur. Besonders geeignet sind die faserreaktiven Textilfarbstoffe, die mit Hydroxylgruppen, beispielsweise von Cellulose, oder Amino- und Thiolgruppen, beispielsweise von Wolle und Seide, von synthetischen Polymeren, wie Polyamiden, oder auch den erfindungsgemäß aminierten Cellulosen, reagieren können und eine kovalente Bindung einzugehen vermögen. Als faserreaktive Komponente an den Textilfarbstoffen seien besonders die Sulfatoethylsulfonyl-, Vinylsulfonyl-, Chlortriazinyl- und Fluortriazinylgruppe sowie Kombinationen dieser Reaktivgruppen genannt.

Als Reaktivfarbstoffe zum Färben oder Bedrucken von erfindungsgemäß modifizierten Cellulosefasern sind alle wasserlöslichen, vorzugsweise anionischen Farbstoffe, die bevorzugt eine oder mehrere Sulfo- und/oder Carboxygruppen besitzen und die faserreaktive Gruppen enthalten, geeignet. Geeignete Farbstoffe können der Klasse der Azo-Entwicklungsfarbstoffe, der Direktfarbstoffe, der Küpenfarbstoffe und der Säurefarbstoffe, der Kupferkomplex-, Kobaltkomplex- und Chromkomplex-Azofarbstoffe, Kupfer- und Nickelphthalocyanin-Farbstoffe, Anthrachinon-, Kupferformazan-, Azomethin-, Nitroaryl-, Dioxazin-, Triphendioxazin-, Phenazin- und Stilbenfarbstoffe angehören. Solche Farbstoffe sind zahlreich in der Literatur beschrieben, beispielsweise in EP-A-0 513 656, und dem Fachmann allseits geläufig.

Wenn nicht anders angegeben, sind die in den nachfolgenden Beispielen angeführten Teile Gewichtsteile.

### Beispiel 1

In 2800 Teile einer betriebsüblichen Spinnviskose mit einem Cellulosegehalt von 9 %, einem Alkaligehalt von 5,5 % und einer Viskosität von 40 Kugelfallsekunden bei 30°C werden 15,1 g einer wäßrigen Polyvinylaminzubereitung mit einem Gehalt von ca. 12 Gew.-% Polyvinylamin mit einem K-Wert nach Fikentscher von 120 eingemischt.

Die Einsatzmenge, bezogen auf Cellulose, beträgt 0,7 %. Nach dem Entgasen wird die Spinnmasse nach einem betriebsüblichen Viskosespinnverfahren in ein wäßriges Bad ersponnen, das Schwefelsäure, Natriumsulfat und Zinksulfat enthält. Das erhaltene Kabel wird in sauren Bädern verstreckt, geschnitten, gewaschen, präpariert und getrocknet.

### Beispiel 2

Analog wie in Beispiel 1 wird eine Spinnmasse hergestellt und ausgesponnen. Dabei wird die Verstreckung in den sauren Bädern um 10 % erhöht.

### Vergleichsbeispiel

Zum Vergleich wird eine Spinnmasse ohne Zusatz eines Modifikators unter den Bedingungen des Beispiels 1 zu Fasern ausgesponnen.

### Fasereigenschaften:

| Meßgröße | Einheit | Bsp. 1 | Bsp. 2 | Vergleichsbsp. |
|---|---|---|---|---|
| Titer | dtex | 1,44 | 1,33 | 1,45 |
| Festigkeit | cN/tex | 27,3 | 30,1 | 24,5 |
| Dehnung | % | 19,5 | 19,0 | 19,2 |
| Naßfestigkeit | cN/tex | 14,1 | 15,2 | 12,1 |

### Anfärbeeigenschaften:

Die Faserflocken wurden unter folgenden Bedingungen gefärbt:

### Färbung 1 (Reaktivfarbstoffe):

Die Fasern aus dem Vergleichsbeispiel wurden konventionell mit 2 % eines gelben Farbstoffes der Formel 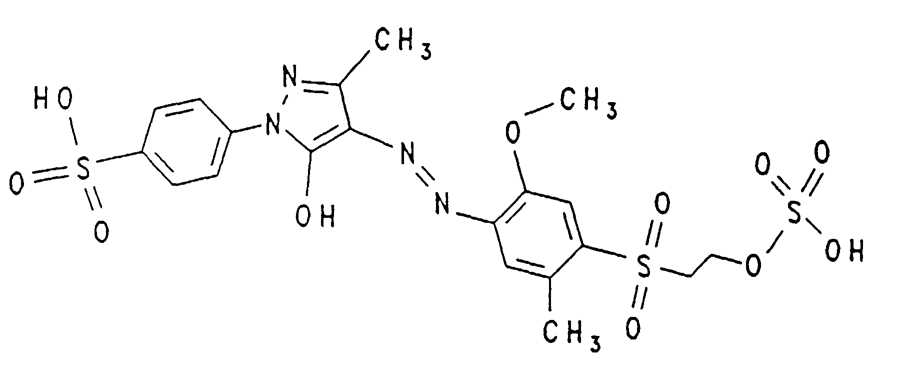 und 3 % eines aus DE-A-11 79 317 bekannten türkisblauen Farbstoffes der Formel 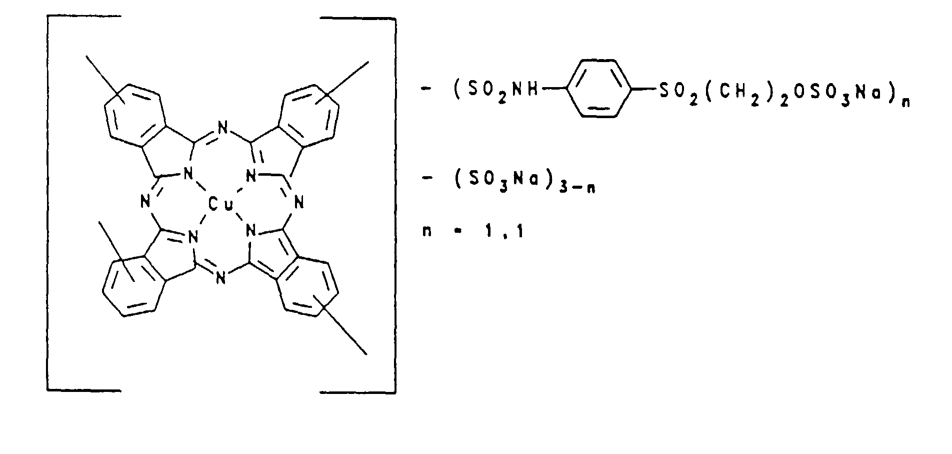 unter Zusatz von 1 g/l 40 %ige Natronlauge, 5 g/l Natriumcarbonat und 50 g/l Natriumsulfat bei einem Flottenverhältnis von 25:1 während 60 Minuten bei 60°C gefärbt.
Nach dem Färben waren die Fasern grün in einer mittleren Farbtiefe.

### Färbung 2 (Reaktivfarbstoffe):

Nach dem gleichen Verfahren wurden die Fasern ohne Zusatz von Alkali und Salz gefärbt.
Nach dem Färben waren die Fasern aus Beispiel 1 und 2 grün, die Farbstärke war tiefer als bei Färbung 1.
Die Fasern aus dem Vergleichsbeispiel wurden nicht angefärbt.

### Färbung 3 (Säurefarbstoffe):

Die Fasern wurden bei einem Flottenverhältnis von 25:1 mit 1 % des gelben Farbstoffes C.I. Acid Yellow 17 (C.I. No. 18 965) der Formel 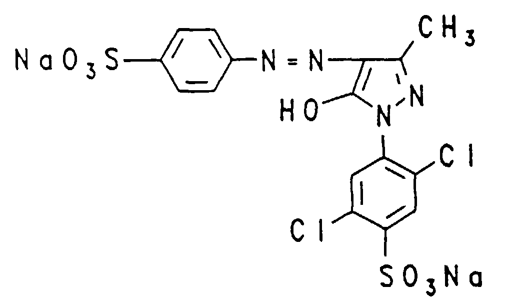 und 2 % des blauen Farbstoffes C.I. Acid Blue 40 (C.I. No. 62 125) der Formel 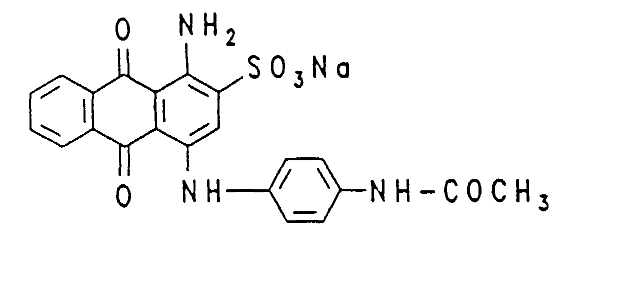 unter Zusatz von 2 % 60 %iger Essigsäure 60 Minuten bei 98°C gefärbt. Dabei färbten sich die Fasern aus den Beispielen 1 und 2 blau, die Fasern aus dem Vergleichsbeispiel blieben ungefärbt.

## Patentansprüche

1. Modifizierte Cellulosefasern, hergestellt, indem man einer Celluloselösung einen Modifikator zusetzt und diese verspinnt oder einer Viskoselösung einen Modifikator zusetzt und nach dem Viskosespinnverfahren Fasern spinnt, dadurch gekennzeichnet, daß der Modifikator ein Polyvinylamin mit einer Molmasse von mehr als 50 000 aus den monomeren Einheiten der Formel (1) 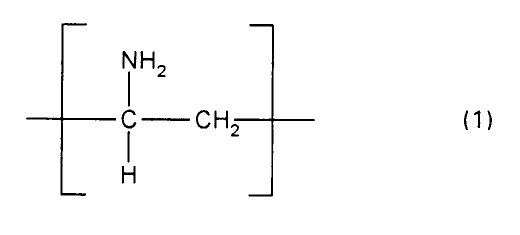 ist.

2. Modifizierte Cellulosefasern nach Anspruch 1, dadurch gekennzeichnet, daß die Menge des in die Cellulosefasern eingelagerten Modifikators 0,1 bis 10 Gew.-%, vorzugsweise 0,3 bis 3 Gew.-%, bezogen auf den Cellulosegehalt der eingesetzten Spinnmasse, ist.

3. Modifizierte Cellulosefasern nach Anspruch 1 oder 2, dadurch gekennzeichnet, daß besagte Cellulosefasern nach einem Viskosespinnverfahren ersponnen werden.

4. Modifizierte Cellulosefasern nach mindestens einem der Ansprüche 1 bis 3, dadurch gekennzeichnet, daß besagte Cellulosefasern nach dem Cuproverfahren oder dem Lyocellverfahren ersponnen werden.

5. Verfahren zum Färben und Bedrucken von Fasermaterialien mit wasserlöslichen Textilfarbstoffen, bei welchem die Färbung mit einer Farbstofflösung, die frei von zusätzlichen Elektrolytsalzen und zusätzlichem Alkali ist, durchführt, dadurch gekennzeichnet, daß man als Fasermaterial ein nach mindestens einem der Ansprüche 1 bis 4 modifiziertes Cellulosefasermaterial verwendet.

6. Verfahren nach Anspruch 5, dadurch gekennzeichnet, daß der Farbstoff eine faserreaktive Gruppe enthält.

7. Garn, Gewebe oder Gestrick aus modifizierten Cellulosefasern nach einem oder mehreren der Ansprüche 1 bis 6.

## Claims

1. Modified cellulose fiber produced by adding a modifier to a cellulose solution and spinning the latter or adding a modifier to a viscose solution and spinning fibers by the viscose spinning process, characterized in that the modifier is a polyvinylamine composed of the monomeric units of the formula (1) 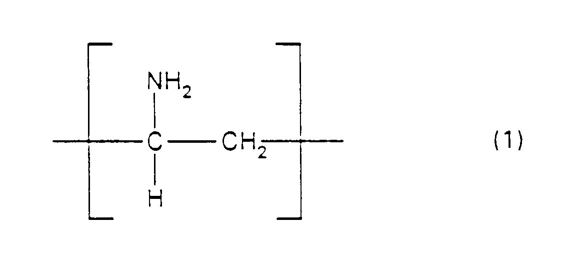 and having a molar mass of more than 50,000.

2. The modified cellulose fiber of claim 1, characterized in that the amount of occluded modifier in the fiber is from 0.1 to 10% by weight, preferably from 0.3 to 3% by weight, based on the cellulose content of the spinning dope used.

3. The modified cellulose fiber of claim 1 or 2, spun by a viscose spinning process.

4. The modified cellulose fiber of at least one of claims 1 to 3, spun by the cupro process or by the lyocell process.

5. A process for dyeing and printing fiber materials with water-soluble textile dyes by dyeing with a dye solution which is free of additional electrolyte salts and additional alkali, characterized in that the fiber material used is a cellulose fiber material modified as claimed in at least one of claims 1 to 4.

6. The process of claim 5, characterized in that the dye contains a fiber-reactive group.

7. Yarn, woven fabric or knitted fabric of modified cellulose fiber as claimed in one or more of claims 1 to 6.

## Revendications

1. Fibres de cellulose modifiées, préparées en ajoutant un modificateur à une solution de cellulose, puis en filant celle-ci, ou en ajoutant un modificateur à une solution de viscose, puis en filant des fibres suivant le procédé de filage de la viscose, caractérisées en ce que le modificateur est une polyvinylamine ayant une masse molaire supérieure à 50 000, formée d'unités monomères de formule (1)

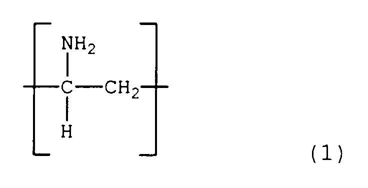

2. Fibres de cellulose modifiées suivant la revendication 1, caractérisées en ce que la quantité du modificateur ajouté aux fibres de cellulose est de 0,1 à 10% en poids, de préférence de 0,3 à 3% en poids, sur la base de la teneur en cellulose de la matière à filer utilisée.

3. Fibres de cellulose modifiées suivant la revendication 1 ou 2, caractérisées en ce que lesdites fibres de cellulose sont filées par extrusion suivant un procédé de filage de la viscose.

4. Fibres de cellulose modifiées suivant l'une au moins des revendications 1 à 3, caractérisées en ce que lesdites fibres de cellulose sont filées suivant le procédé par extrusion cupro-ammoniacal ou suivant le procédé Lyocell.

5. Procédé de coloration et d'impression de matériaux fibreux avec des colorants textiles solubles dans l'eau, dans lequel la coloration est réalisée avec une solution de colorant exempte de sels électrolytiques supplémentaires et d'alcalin supplémentaire, caractérisé en ce que le matériau fibreux utilisé est un matériau de fibre de cellulose modifiée suivant au moins l'une des revendications 1 à 4.

6. Procédé suivant la revendication 5, caractérisé en ce que le colorant contient un groupement réactif vis-à-vis de fibre.

7. Fil, tissu ou tricot formé de fibres de cellulose modifiées suivant une ou plusieurs des revendications 1 à 6.
